# EUROPÄISCHE PATENTSCHRIFT

(11) **EP 3 737 788 B1**
(45) Veröffentlichungstag und Bekanntmachung des Hinweises auf die Patenterteilung: **23.08.2023**
(21) Anmeldenummer: 19700350.2
(22) Anmeldetag: 08.01.2019
(51) Int. Cl.: D06F 39/02, D06F 33/30, A47L 15/00

(54) **VERFAHREN ZUR BESTIMMUNG EINES AUFENTHALTSORTES VON EINER IN EIN HAUSHALTSEINRICHTUNG EINBRINGBAREN VORRICHTUNG**
METHOD FOR DETERMINING A POSITION OF AN APPARATUS WHICH CAN BE INSERTED INTO A DOMESTIC DEVICE
PROCÉDÉ POUR LA DÉTERMINATION D'UN SITE D'ARRÊT D'UN DISPOSITIF POUVANT ÊTRE INTRODUIT DANS UN APPAREIL DOMESTIQUE

(30) Priorität: 09.01.2018 DE 102018200214
(43) Veröffentlichungstag der Anmeldung: 18.11.2020
(73) Patentinhaber: Henkel AG & Co. KGaA, 40589 Düsseldorf (DE)
(72) Erfinder: KESSLER, Arnd, 40789 Monheim am Rhein (DE); ZUECHNER, Lars, 40764 Langenfeld (DE); RUIZ HERNANDEZ, Robert, 40211 Düsseldorf (DE)
(86) Internationale Anmeldenummer: PCT/EP2019/050319
(87) Internationale Veröffentlichungsnummer: WO 2019/137900

(56) Entgegenhaltungen:
- WO-A1-2017/167658
- DE-A1- 10 114 256
- DE-A1-102016 203 095
- US-A1- 2012 222 712
- US-A1- 2015 275 414

## Beschreibung

### Gebiet der Erfindung

Die Erfindung betrifft Verfahren und Vorrichtungen zur Bestimmung eines Aufenthaltsortes von einer in eine Flüssigkeit und/oder Gas führende Haushaltseinrichtung einbringbaren Vorrichtung.

### Hintergrund der Erfindung

Aus dem Stand der Technik sind Vorrichtungen und Verfahren zur Steuerung und/oder Regelung von Haushaltsgeräten, wie beispielsweise Waschmaschinen, Spülmaschinen oder Wäschetrocknern bekannt. Ziel beim Betreiben solcher Haushaltsvorrichtungen ist es typischerweise, eine hohe Nutzerfreundlichkeit und gleichzeitig ein möglichst gutes Ergebnis (im Falle einer Waschmaschine insbesondere ein möglichst makelloses Reinigungsergebnis) zu erzielen.

Soll beispielsweise eine verstärkte Verschmutzung berücksichtigt werden, muss ein Nutzer dies beispielsweise manuell berücksichtigen und ein entsprechendes Programm oder Waschmittel wählen. Es sind Ansätze bekannt, bei denen Parameter des Haushaltsgerätes automatisch angepasst werden, um ein möglichst gutes Ergebnis zu erzielen. Dabei werden beispielsweise Parameter des Haushaltsgerätes an von dem verwendeten Reinigungsmittel definierten Parameter angepasst. Beispielsweise wird das Waschprogramm einer Waschmaschine an das verwendete Waschmittel angepasst.

Dokument DE102016203095 A1 beschreibt ein System, das eine Geschirrspülmaschine umfasst, in der eine Funkverbindung mit einem externen Gerät und einem Dosiergerät hergestellt wird.

Es sind ferner in einen Behandlungsraum von Haushaltsgeräten einbringbare Dosiervorrichtungen bekannt, die eine automatische Dosierung z. B. von Reinigungsmittel in den Behandlungsraum vornehmen.

Nachteilig ist, dass in vielen Situationen und Szenarien das zu erzielende Ergebnis weiterhin verbesserungsbedürftig ist, z. B. das Reinigungsmittel von einer in einen Behandlungsraum eingebrachten Dosiervorrichtung in Abhängigkeit eines Steuerungsbefehls dosiert wird. Hierbei kann es vorkommen, dass Reinigungsmittel z. B. zu früh oder zu spät, oder etwa sogar dosiert wird, wenn die Dosiervorrichtung sich nicht in dem Behandlungsraum von einem Haushaltsgerät befindet.

Allgemeine Beschreibung einiger beispielhafter Ausführungsformen der Erfindung Vor dem Hintergrund des dargestellten Standes der Technik ist es somit die Aufgabe, die beschriebenen Probleme zumindest teilweise zu verringern oder zu vermeiden, das heißt insbesondere das mit einem Haushaltgerät zu erzielende Ergebnis hinsichtlich der vielen möglichen Situationen und Szenarien variabel zu verbessern und hierbei eine möglichst hohe Zuverlässigkeit zu gewährleisten. Ferner ist es die Aufgabe, auch weitere Anwendungsgebiete, die eine Behandlung von Flüssigkeit und/oder Gas, insbesondere von Schlechtgerüchen, umfassen, hinsichtlich des vorstehend angeführten und zu erzielenden Ergebnisses variabel zu verbessern.

Diese Aufgabe wird gegenständlich durch ein Verfahren mit den Merkmalen des Anspruchs 1 gelöst.

Gemäß einem ersten Aspekt der Erfindung wird ein Verfahren beschrieben, durchgeführt von einer oder mehreren Vorrichtungen, das Verfahren umfassend:
- Erfassen einer Ortsinformation indikativ für einen Aufenthaltsort einer in eine Flüssigkeit und/oder Gas führende Haushaltseinrichtung einbringbaren Vorrichtung;
- Bestimmen einer Behandlungsrauminformation indikativ für einen Rückschluss, ob die zumindest eine Vorrichtung in einem Behandlungsraum der Haushaltseinrichtung eingebracht ist oder nicht, wobei die Behandlungsrauminformation zumindest teilweise basierend auf der erfassten Ortsinformation bestimmt wird; und
- Ausgeben bzw. Veranlassen des Ausgebens der bestimmten Behandlungsrauminformation, dadurch gekennzeichnet, dass die erfasste Ortsinformation repräsentativ für eine Signalstärke von einem oder mehreren drahtlosen Kommunikationsnetzen ist, wobei die Signalstärke basierend auf von dem einen oder den mehreren Kommunikationsnetzen gesendeten Signalen erfasst wird, und, dass das Bestimmen der Behandlungsrauminformation ein Bestimmen einer Signaldämpfung zumindest teilweise basierend auf der erfassten Information, die eine Signalstärke der einen oder mehreren Kommunikationsnetze repräsentiert, umfasst.

Gemäß einem zweiten Aspekt der Erfindung wird eine Vorrichtung beschrieben, welche dazu eingerichtet ist oder entsprechende Mittel umfasst, ein Verfahren nach dem ersten Aspekt durchzuführen.

Vorrichtungen des Verfahrens gemäß dem ersten Aspekt sind oder umfassen insbesondere eine oder mehrere Vorrichtungen gemäß dem zweiten Aspekt. Die Vorrichtung gemäß dem zweiten Aspekt der Erfindung ist beispielsweise eine Dosiervorrichtung und/oder eine physikalische Behandlungseinrichtung. Eine Dosiervorrichtung ist insbesondere zum Ausgeben einer Zubereitung umfassend Behandlungsmittel, Duftstoffe, Wasch- und/oder Reinigungsmittel ausgebildet und/oder eingerichtet. Die Vorrichtung gemäß dem zweiten Aspekt der Erfindung ist beispielsweise eine Sensorvorrichtung zum Erfassen von einer Ortsinformation bezüglich des Aufenthaltsorts der Vorrichtung (z. B. innerhalb oder außerhalb eines Behandlungsraums der Haushaltseinrichtung) zu dem Haushaltseinrichtung. Die Vorrichtung gemäß dem zweiten Aspekt der Erfindung ist beispielsweise auch eine Einrichtung zur physikalischen Behandlung - auch physikalische Behandlungseinrichtung einer Flüssigkeit (z. B. Wasser) oder eines Gases (z.B. eine Einheit, die elektromagnetische Strahlung z.B. UV-Licht abgibt, die eine Flüssigkeit oder ein Gas mit einer elektrischen Spannung beaufschlagt, z.B. zum Bewirken chemischer Reaktionen, oder zur Ionisation eines Gases, bspw. zur Herstellung einer bestimmten chemischen Verbindung wie Ozon oder Sauerstoff, und/oder zur Behandlung eines Schlechtgeruches und/oder zum Anreichern einer Flüssigkeit, insbesondere Wasser, mit einem Behandlungsmittel, Duftstoffen, Wasch- und/oder Reinigungsmittel, oder einer Kombination hiervon).

Die Vorrichtung gemäß dem zweiten Aspekt ist beispielsweise eine Dosiervorrichtung und/oder eine physikalische Behandlungseinrichtung in Kombination mit einer derartigen Sensorvorrichtung.

Alternativ oder zusätzlich können die Mittel der Vorrichtung oder die Vorrichtung selber gemäß dem zweiten Aspekt ferner einen oder mehrere weitere Sensoren und/oder eine oder mehrere Kommunikationsschnittstellen umfassen.

Unter einer Kommunikationsschnittstelle soll beispielsweise eine drahtlose Kommunikationsschnittstelle und/oder eine drahtgebundene Kommunikationsschnittstelle verstanden werden.

Eine drahtlose Kommunikationsschnittstelle ist beispielsweise eine Kommunikationsschnittstelle gemäß einer drahtlosen Kommunikationstechnik. Ein Beispiel für eine drahtlose Kommunikationstechnik ist eine lokale Funknetztechnik wie Radio Frequency Identification (RFID) und/oder Near Field Communication (NFC) und/oder Bluetooth (z. B. Bluetooth Version 2.1 und/oder 4.0) und/oder Wireless Local Area Network (WLAN). RFID und NFC sind beispielsweise gemäß den ISO-Standards 18000, 11784/11785 und dem ISO/IEC-Standard 14443-A und 15693 spezifiziert. WLAN ist zum Beispiel in den Standards der IEEE-802.11-Familie spezifiziert. Ein weiteres Beispiel für eine drahtlose Kommunikationstechnik ist eine überörtliche Funknetztechnik wie beispielsweise eine Mobilfunktechnik, zum Beispiel Global System for Mobile Communications (GSM) und/oder Universal Mobile Telecommunications System (UMTS) und/oder Long Term Evolution (LTE). Die GSM-, UMTS- und LTE-Spezifikationen werden von dem 3rd Generation Partnership Project (3GPP) gepflegt und entwickelt.

Eine drahtgebundene Kommunikationsschnittstelle ist beispielsweise eine Kommunikationsschnittstelle gemäß einer drahtgebundenen Kommunikationstechnik. Beispiele für eine drahtgebundene Kommunikationstechnik sind ein Local Area Network (LAN) und/oder ein Bus-System, zum Beispiel ein Controller-Area-Network-Bus (CAN-Bus) und/oder ein universeller serieller Bus (USB). CAN-Bus ist beispielsweise gemäß dem ISO-Standard ISO 11898 spezifiziert. LAN ist zum Beispiel in den Standards der IEEE-802.3-Familie spezifiziert. Es versteht sich, dass die Vorrichtung gemäß dem zweiten Aspekt auch andere nicht aufgeführte Mittel umfassen kann.

Im Folgenden werden beispielhafte Merkmale und beispielhafte Ausgestaltungen nach allen Aspekten detaillierter beschrieben:
Unter einer Flüssigkeit und/oder Gas führenden Haushaltseinrichtung wird insbesondere ein Haushaltsgerät, oder eine einen Behandlungsraum aufweisende Sanitäreinrichtung verstanden.

Unter einem Haushaltsgerät wird insbesondere eine Waschmaschine und/oder eine Spülmaschine, insbesondere auch ein (Wäsche-)Trockner, und/oder ein Waschtrockner verstanden. Entsprechende Haushaltseinrichtungen können einen Behandlungsraum aufweisen, welcher dafür eingerichtet ist, Gegenstände wie Haushaltswaren, Textilien, Geschirr und/oder Besteck aufzunehmen und innerhalb des Behandlungsraums einer Behandlung zu unterziehen, beispielsweise einer Reinigung, und/oder Trocknung, z. B. im Rahmen eines von dem Haushaltsgerät durchführbaren Reinigungsprogramms. Insbesondere wird unter einem Haushaltsgerät ein wasserführendes Haushaltsgerät verstanden, wobei beispielsweise Wasser zumindest teilweise zur Behandlung der Gegenstände, wie etwa Geschirr oder Wäsche, , insbesondere im Rahmen eines durchführbaren Reinigungsprogramms eingesetzt wird.

Unter der einen Behandlungsraum aufweisenden Sanitäreinrichtung wird insbesondere eine Toilette verstanden. Entsprechende Toiletten haben bekanntermaßen eine vorliegend als Behandlungsraum bezeichnete und regelmäßig aus Porzellan bestehende Toilettenschüssel. Die Toilettenschüssel wird mit einer Flüssigkeit, insbesondere Wasser, durchspült. Ferner können mitunter auftretende Schlechtgerüche, die durch Gas verursacht werden können, in diesem Behandlungsraum auftreten. Der Begriff des Behandlungsraums bezieht sich vorliegend also auf die Behandlung insbesondere von Flüssigkeit, wie z. B. Wasser, das die Toilettenschüssel durchspült und Gase, die entstehen können.

Die Vorrichtung ist dafür eingerichtet, in einem entsprechenden Behandlungsraum einer derartigen Haushaltseinrichtung positioniert zu werden und weist insbesondere eine entsprechende Größe auf, die erlaubt, die Vorrichtung zumindest teilweise aus dem Behandlungsraum nach einem initialen Einbringen (wieder) zu entfernen. Insbesondere ist die Vorrichtung lose und/oder ohne Verbindungsmittel in dem Behandlungsraum positionierbar. Beispielsweise ist die Vorrichtung bei einer Waschmaschine, Spülmaschine, Trockner oder Waschtrockner gemeinsam mit den zu reinigenden Gegenständen in den Behandlungsraum einzubringen und/oder zu entnehmen. Ein Gehäuse der Vorrichtung umschließt insbesondere einzelne oder alle Mittel der Vorrichtung teilweise oder vollständig. Insbesondere ist das Gehäuse flüssigkeitsdicht bzw. wasserdicht ausgestaltet, so dass einzelne oder alle Mittel der Vorrichtung nicht mit Flüssigkeit, insbesondere Wasser in Kontakt treten, wenn die Vorrichtung in einem Behandlungsraum, beispielsweise dem Behandlungsraum einer Waschmaschine oder Toilette und insbesondere während einer Behandlung positioniert wird.

Die Vorrichtung gemäß dem zweiten Aspekt ist insbesondere eine mobile und/oder tragbare Vorrichtung und/oder eine von der Haushaltseinrichtung verschiedene Vorrichtung. Unter einer mobilen und/oder tragbaren Vorrichtung soll beispielsweise eine Vorrichtung verstanden werden, deren äußere Abmessungen z. B. kleiner als 30 cm x 30 cm x 30 cm, vorzugsweise kleiner als 15 cm x 15 cm x 15 cm sind. Eine von einer Haushaltseinrichtung verschiedene Vorrichtung ist beispielsweise eine Vorrichtung, die keine funktionale Verbindung mit der Haushaltseinrichtung hat und/oder kein dauerhaft mit der Haushaltseinrichtung verbundenes Teil darstellt. Zum Beispiel soll unter einer mobilen und/oder tragbaren sowie von einer Haushaltseinrichtung verschiedenen Vorrichtung eine für die Dauer eines Behandlungsvorgangs (z. B. Reinigungsprogramm) in den Wasch- und/oder Reinigungsbereich der Haushaltseinrichtung (z. B. die Waschtrommel einer Waschmaschine) durch einen Nutzer eingebrachte (z. B. eingelegte) Vorrichtung verstanden werden.

In einer Ausgestaltung nach allen Aspekten der Erfindung beträgt der für den Behandlungsraum der Haushaltseinrichtung während einer Behandlung vorgesehene Temperaturbereich 0C bis 150 °C, insbesondere 20°C bis 75 C oder 30°C bis 60 °C.

Die Vorrichtung umfasst beispielsweise ferner einen Vorratsbehälter. Ein derartiger Vorratsbehälter ist beispielsweise ausgebildet, eine Zubereitung (z. B. eine bestimmte Menge eines Wasch- und/oder Reinigungsmittels) aufzunehmen. Zum Beispiel weist der Vorratsbehälter eine oder mehrere Vorratskammern zum Aufnehmen der Zubereitung auf. Wenn der Vorratsbehälter mehrere Vorratskammern aufweist, kann zum Beispiel jede der Vorratskammern eine andere Zubereitung wie ein anderes Wasch- und/oder Reinigungsmittel und/oder ein anderes Wasch- und/oder Reinigungsmittelgemisch und/oder Duftstoffe und/oder Behandlungsmittel enthalten. Der Vorratsbehälter kann beispielsweise in einer bestimmten Raumform ausgebildet sein (z. B. würfelartig, kugelförmig und/oder plattenartig). Der Vorratsbehälter kann beispielsweise zumindest teilweise formstabil ausgebildet sein. Alternativ oder zusätzlich kann der Vorratsbehälter zum Beispiel zumindest teilweise flexibel ausgebildet sein, beispielsweise als flexibles Packmittel (z. B. als eine Tube und/oder als ein Beutel). Es versteht sich, dass der Vorratsbehälter auch als von einem zumindest teilweise formstabilen Aufnahmebehältnis umfasstes zumindest teilweises flexibles Behältnis ausgebildet sein kann, zum Beispiel als ein Beutel in einem im Wesentlichen formstabilen Rahmen.

Die Zubereitung, insbesondere ein Wasch- und/oder Reinigungsmittel, ein Duftstoff, ein Behandlungsmittel, oder eine Kombination hiervor ist beispielsweise in fester, flüssiger, und/oder gasförmiger Form in dem Vorratsbehälter enthalten bzw. von diesem bevorratet. Zum Beispiel ist die Zubereitung ein Reinstoff und/oder ein Stoffgemisch. Eine feste Zubereitung wie ein Wasch- und/oder Reinigungsmittel kann beispielsweise als Pulver, als Tablette und/oder als Tab in dem Vorratsbehälter enthalten sein. Eine flüssige Zubereitung kann beispielsweise als Gel, als konzentrierte und/oder als verdünnte Lösung in dem Vorratsbehälter enthalten bzw. bevorratet sein. Es versteht sich, dass die Zubereitung auch als Schaum, als Hartschaum, als Emulsion, als Suspension und/oder als Aerosol in dem Vorratsbehälter enthalten sein kann. Nicht abschließende Beispiele von Zubereitungen bzw. Wasch- und/oder Reinigungsmitteln und/oder deren Inhaltsstoffen sind eine oder mehrere Komponenten aus einer Gruppe von Komponenten umfassend Tenside, Alkalien, Builder, Vergrauungsinhibatoren, optische Aufheller, Enzyme, Bleichmittel, Soil-Release-Polymere, Füller, Weichmacher, Duftstoffe, Farbstoffe, Pflegestoffe, Säuren, Stärke, Isomalt, Zucker, Zellulose, Zellulosederivate, Carboxymethylcellulose, Polyetherimid, Silikonderivate und/oder Polymethylimine. Weitere nicht abschließende beispielhafte Bestandteile sind Bleichaktivatoren, Komplexbildner, Gerüststoffe, Elektrolyte, nichtwässrige Lösungsmittel, pH-Stellmittel, Parfümträger, Fluoreszenzmittel, Hydrotrope, Silikonöle, Bentonite, Antiredepositionsmittel, Einlaufverhinderer, Knitterschutzmittel, Farbübertragungsinhibitoren, antimikrobielle Wirkstoffe, Germizide, Fungizide, Antioxidantien, Konservierungsmittel, Korrosionsinhibitore, Antistatika, Bittermittel, Bügelhilfsmittel, Phobier- oder Imprägniermittel, Quell- oder Schiebefestmittel und/oder UV-Absorber.

Die Vorrichtung ist dazu ausgebildet und/oder eingerichtete, die Zubereitung zu dosieren, z. B. basierend auf einem Steuerungssignal, das z. B. von der Vorrichtung auf Basis von einer oder mehreren verschiedenen Informationen (z. B. eine Behandlungsrauminformation) generiert wird, oder das der Vorrichtung von einer weiteren, von der Vorrichtung verschiedenen Entität übermittelt wird.

Die Ortsinformation ist beispielsweise indikativ für einen Aufenthaltsort der Vorrichtung. Beispielsweise repräsentiert die Ortsinformation einen Aufenthaltsort der Vorrichtung in Bezug auf die Haushaltseinrichtung, z. B. ob sich die Vorrichtung innerhalb oder außerhalb eines Behandlungsraums der Haushaltseinrichtung befindet. Beispielsweise repräsentiert die Ortsinformation einen geographischen Aufenthaltsort der Vorrichtung, z. B. in Bezug auf einen Raum eines Haushalts, der die Haushaltseinrichtung umfasst. Ferner kann die Ortsinformation beispielsweise einen Aufenthaltsort in Form von Koordinaten (z. B. x-, y-Koordinaten und optional eine z-Koordinate, oder x-, y-Koordinaten und eine Höheninformation) repräsentieren. Zusätzlich kann die Ortsinformation indikativ für einen weiteren Aufenthaltsort sein, der insbesondere den Aufenthaltsort der Haushaltseinrichtung repräsentiert.

Das Verfahren wird vor Beginn eines Reinigungszyklus implementiert.

Die Position der Dosiereinheit wird vor Beginn eines Reinigungszyklus im Haushaltsgerät überprüft. Durch die Überprüfung, ob sich die Dosiereinheit vor Beginn des Reinigungszyklus im Hausgerät befindet, ist es möglich, den Benutzer darauf hinzuweisen, dass er vergessen hat, die Dosiereinheit in das Hausgerät einzubauen. Es ist auch möglich, die Reinigungsstrategie anzupassen, wenn festgestellt wird, dass sich die Dosiereinheit nicht im Hausgerät befindet. So kann beispielsweise das Fehlen der Dosiereinheit zu einer Änderung der Reinigungsstrategie und der Verwendung von Reinigungsmitteln führen, die aus einem Tank des Haushaltsgeräts anstelle der Dosiereinheit ausgegeben werden. Eine Änderung der Reinigungsstrategie kann auch durch eine Änderung des laufenden Reinigungsprogramms erfolgen.

Die Behandlungsrauminformation repräsentiert beispielsweise eine binäre Information, die indikativ dafür ist, ob die Vorrichtung (tatsächlich) in den Behandlungsraum von der Haushaltseinrichtung eingebracht ist oder nicht. Alternativ repräsentiert die Behandlungsrauminformation beispielsweise einen Wahrscheinlichkeitswert, der Aufschluss darüber gibt, wie wahrscheinlich es ist, dass die Vorrichtung in den Behandlungsraum der Haushaltseinrichtung eingebracht ist. Ferner kann die Behandlungsrauminformation einen oder mehrere weitere Parameter umfassen, die im Folgenden noch detaillierter beschrieben sind.

Die bestimmte Behandlungsrauminformation wird ausgegeben bzw. dessen Ausgabe wird veranlasst. Beispielsweise wird die bestimmte Behandlungsrauminformation an die Haushaltseinrichtung ausgegeben. Alternativ oder zusätzlich wird die bestimmte Behandlungsrauminformation an ein Nutzergerät, z. B. ein Mobilgerät ausgegeben. Alternativ oder zusätzlich kann die bestimmte Behandlungsrauminformation an zumindest einen Server ausgegeben werden (oder an eine Server-Cloud), oder an eine weitere Entität, die von dem zumindest einen Server verschieden ist und die bestimmte Behandlungsrauminformation an den zumindest einen Server übermittelt.

Die bestimmte Behandlungsrauminformation kann beispielsweise bei einer Steuerung und/oder Regelung der Haushaltseinrichtung und/oder der Vorrichtung berücksichtigt werden.

Im Sinne des vorliegenden Gegenstands wird unter einer Steuerung und/oder Regelung der Haushaltseinrichtung, z. B. über zumindest einen Server oder direkt ausgehend von der Vorrichtung, insbesondere verstanden, dass eine Steuerung und/oder Regelung von der Haushaltseinrichtung seitens des zumindest einen Server oder seitens der Vorrichtung erfolgen kann. Ferner wird ebenfalls unter dieser Formulierung verstanden, dass von dem zumindest einen Server Informationen, z. B. an ein Nutzergerät (z. B. mobiles Gerät, wie etwa ein Smartphone, Tablet, Wearable, loT Gerät, um nur einige nicht-limitierende Beispiele zu nennen) oder einen im Haushalt angeordneten Home Appliance Server (auch als Smart Home Server bzw. Smart Home System bezeichnet), übermittelt werden, z. B. nach einer zuvor erfolgten Anfrage, und die Steuerung und/oder Regelung der zumindest einen Haushaltseinrichtung anschließend seitens des Nutzergerätes oder des im Haushalt angeordneten Home Appliance Servers erfolgt. Entsprechend kann ferner eine direkte Kommunikation zwischen der zumindest einen Haushaltseinrichtung und dem zumindest einen Server stattfinden. Alternativ kann eine indirekte Kommunikation zwischen der zumindest einen Haushaltseinrichtung und dem zumindest einen Server, beispielsweise über das Nutzergerät und/oder den im Haushalt angeordneten Home Appliance Server erfolgen. Insbesondere umfasst das System ferner zumindest ein Nutzergerät und/oder den im Haushalt angeordneten Home Appliance Server.

Derart ist es möglich, insbesondere das mit einem Haushaltgerät zu erzielende Ergebnis hinsichtlich der vielen möglichen Situationen und Szenarien variabel zu verbessern, insbesondere indem zahlreiche vorhandene Informationen zur Steuerung und/oder Regelung der Haushaltseinrichtung genutzt werden. Dies wird insbesondere dadurch realisiert, dass die Haushaltseinrichtung steuer- und/oder regelbar ist, wenn sich die Vorrichtung (tatsächlich) in dem Behandlungsraum der Haushaltseinrichtung befindet.

Eine Kommunikation zwischen der Haushaltseinrichtung und dem zumindest einen Server kann beispielsweise zumindest teilweise drahtlos und/oder drahtgebunden stattfinden. Eine drahtlose Kommunikation kann beispielsweise basierend auf einer Mobilfunkkommunikation (z. B. gemäß dem 2G-, GPRS- (General Packet Radio Service), 3G-, LTE- (Long Term Evolution), oder zukünftigen 5G-Standards), oder einer Nahbereich-Kommunikation (z. B: gemäß einer BT-(Bluetooth), BLE- (Bluetooth Low Energy), ZigBee-Kommunikation, um nur einige nicht-limitierende Beispiele zu nennen), oder auf einer WLAN (Wireless Local Area Network) basierten Kommunikation durchgeführt werden. Eine drahtgebundene Kommunikation kann beispielsweise basierend auf einer dem LAN (Local Area Network), und/oder dem WAN (Wide Area Network) Standard folgenden Kommunikation erfolgen.

Ferner kann beispielsweise eine Steuerung und/oder Regelung der Haushaltseinrichtung derart erfolgen, dass eine Eingabe von einer Eingabeeinrichtung (z. B. Spracheingabeassistenzvorrichtung oder dergleichen) erfasst wird, von der Eingabeeinrichtung an den zumindest einen Server weitergeleitet wird, und anschließend über diesen zumindest einen Server eine Steuerung und/oder Regelung der Haushaltseinrichtung zumindest teilweise basierend auf der Eingabe erfolgt.

Zumindest teilweise basierend auf der bestimmten Behandlungsrauminformation kann beispielsweise die Vorrichtung erkennen bzw. erfassen, ob sie sich in Inneren des Behandlungsraums der Haushaltseinrichtung befindet. Durch die Ausgabe bzw. das Veranlassen des Ausgebens der bestimmten Behandlungsrauminformation kann beispielsweise die Haushaltseinrichtung Kenntnis darüber erlangen (wenn die bestimmte Behandlungsrauminformation an die Haushaltseinrichtung übermittelt wird), dass die Vorrichtung sich in dem Behandlungsraum der Vorrichtung befindet. Alternativ oder zusätzlich kann die Haushaltseinrichtung Kenntnis darüber erlangen, dass sich die Vorrichtung in dem Behandlungsraum der Haushaltseinrichtung befindet. Beispielsweise kann ein Nutzer bestätigen, dass sich die Vorrichtung tatsächlich in dem Behandlungsraum der Vorrichtung befindet für den Fall, dass nicht mit Sicherheit zumindest teilweise basierend auf der bestimmten Behandlungsrauminformation feststellbar ist, dass sich die Vorrichtung innerhalb des Behandlungsraums der Vorrichtung befindet.

Eine beispielhafte Ausgestaltung nach allen Aspekten sieht vor, dass die Ortsinformation von zumindest einem Sensor erfasst wird, wobei der zumindest eine Sensor zur Erfassung von einem oder mehreren der folgenden Parameter i) bis vi) ausgebildet ist:
i) Lichtintensität;
ii) akustisches Signal;
iii) Leitfähigkeit;
iv) Beschleunigung;
v) Temperatur; und
vi) Signalstärke bzw. Signaldämpfung (z. B. durch Abschirmung eine sogenannte Schirmdämpfung)

Das Vorhandensein der Dosiereinheit im Inneren des Haushaltsgeräts kann beispielsweise anhand einer Änderung der Werte dieser Parameter beurteilt werden (Abnahme der Signalintensität beim Schließen der Tür des Haushaltsgeräts, Erhöhung der Temperatur, eine für einen geschlossenen Raum repräsentative akustische Umgebung usw.).

Diese Parameter i) bis vi) können beispielsweise ferner von der Behandlungsrauminformation umfasst sein.

Die Lichtintensität kann beispielsweise mittels eines optischen Sensors erfasst werden. Unter einem optischen Sensor wird ein Sensor verstanden, der eine optische Information, wie Licht als Information erfassen kann. Beispielsweise kann eine LED als optischer Sensor sowohl Licht emittieren wie auch detektieren. Ein Beladungszustand des Behandlungsraums von der Haushaltseinrichtung kann durch mindestens eine Sender-LED und einen optischen Sensor umfassend mindestens eine Empfänger-LED ermittelt werden. Sind Sender-LED und Empfänger-LED baugleich, kann eine Transmission bzw. Abschwächung der Strahlung durch die herrschende Beladung des Behandlungsraums von der Haushaltseinrichtung auf besonders einfache und direkte Weise ermittelt werden. Die Empfänger-LED kann dabei beispielsweise außerhalb der Vorrichtung, z. B. von dem Behandlungsraum der Haushaltseinrichtung umfasst sein. Ebenso kann eine Anordnung von Sender-LED und Empfänger-LED in einer Reflektions- bzw. Emissionsmessung vorgesehen sein.

Unter einem optischen Sensor wird ferner insbesondere ein Sensor verstanden, der eine Intensität einfallender Strahlung, insbesondere elektromagnetischer Strahlung im sichtbaren Bereich und alternativ oder zusätzlich darüber hinaus, in einem nicht-sichtbaren Bereich ermitteln kann. Der optische Sensor kann einen Bildsensor umfassen, insbesondere einen digitalen Bildsensor. Zur Ermittlung der Intensität der Strahlung kann insbesondere mindestens ein Halbleiterelement, Dioden, CCD-Elemente, beispielsweise ein Bayer-Sensor, oder CMOS-Elemente, beispielsweise ein Sensor des Typs Foveon X3, verwendet werden. Der optische Sensor kann optische Filter und insbesondere ein Spektrometer enthalten. Denkbar ist ebenfalls die Verwendung von monochromen Sensoren ohne Farbauflösung. Ebenso können optische Sensoren verwendet werden, die auf bestimmte Wellenlängenbereiche beschränkt sind. Beispielsweise kann der optische Sensor auf mindestens einer Fotodiode und/oder mindestens einem LED-Element basieren. Einzelne Elemente oder Felder von Elementen, beispielsweise Fotodioden oder lichtempfindliche Bauteile wie LEDs können verwendet werden. Es kann vorteilhaft sein, die Größe der einzelnen Sensoren, beispielsweise der einzelnen Fotodioden im Hinblick auf Dynamik, Auflösung und/oder Empfindlichkeit zu optimieren.

Der optische Sensor umfasst beispielsweise mindestens ein kameraartiges Element und stellt eine Bildinformation bereit. Entsprechend können digitale Kameras als optische Sensoren für die Vorrichtung herangezogen werden.

Mittels eines optischen Sensors können insbesondere Informationen erfasst werden, die indikativ für eine Lichtveränderung (z. B. Erhöhung oder Reduzierung der Lichtintensität, -temperatur, oder dergleichen) sind. Beispielsweise kann sich die von einem optischen Sensor erfasste Lichtintensität verringern, wenn die Vorrichtung von außerhalb des Behandlungsraums von der Haushaltseinrichtung in diesen hineingebracht wird.

Das akustische Signal kann beispielsweise mittels eines akustischen Sensors erfasst werden. Unter einem akustischen Sensor wird ein Sensor verstanden, der akustische Informationen erfassen kann. Ein derartiger akustischer Sensor umfasst oder ist beispielsweise ein Mikrofon. Die seitens des akustischen Sensors erfassten Informationen können beispielsweise Geräusche repräsentieren. Eine seitens des akustischen Sensors erfasste Information ist beispielsweise indikativ für einen mechanischen Zustand der Vorrichtung und/oder der Haushaltseinrichtung, insbesondere des Behandlungsraums der Haushaltseinrichtung. Unübliche Geräusche lassen beispielsweise auf einen Defekt der Vorrichtung und/oder der Haushaltseinrichtung schließen. Ferner kann eine seitens des akustischen Sensors erfasste Information indikativ für einen Beladungszustand des Behandlungsraums und/oder für einen Flüssigkeitsfüllstand des Behandlungsraums von der Haushaltseinrichtung sein. Ein derartiger akustischer Sensor umfasst oder ist beispielsweise ein Ultraschallsensor, wobei von einem derartigen Ultraschallsensor erfasste Informationen beispielsweise indikativ für entsprechende Antwortsignale z. B. auf Basis eines von dem Ultraschallsensor ausgesendeten Ultraschallimpulses sind. Beispielsweise kann durch einen Vergleich mit einem Referenzwert (der beispielsweise im Vorfeld z. B. im Rahmen eines Trainingsfalls ermittelt wird) bestimmt werden, ob sich die Vorrichtung innerhalb des Behandlungsraums der Vorrichtung befindet oder nicht. Die Beschleunigung kann beispielsweise mittels eines Beschleunigungssensors erfasst werden. Unter einem Beschleunigungssensor wird ein Sensor verstanden, der seine Beschleunigung misst. Dies erfolgt beispielsweise, indem die auf eine Masse des Beschleunigungssensor wirkende Trägheitskraft bestimmt wird. Somit kann z. B. bestimmt werden, ob eine Geschwindigkeitszunahme oder -abnahme stattfindet.

Ein Beschleunigungssensor kann beispielsweise einen Bewegungssensor darstellen. Ein derartiger Bewegungssensor kann beispielsweise eine Lageänderung erfassen. Beispielsweise kann eine Bewegung mittels eines Beschleunigungssensors derart erfasst werden, dass z. B. Bewegungen als Integration über erfasste Informationen (z. B. Messwerte) eines Beschleunigungssensors errechnet werden. Beispielsweise kann derart eine Positionsbestimmung der Vorrichtung, z. B. in dem Behandlungsraum von der Haushaltseinrichtung durchgeführt werden.

Die Temperatur kann beispielsweise mittels eines Temperatursensors erfasst werden. Unter einem derartigen Temperatursensor wird ein Sensor verstanden, der eine Information erfasst, die indikativ für eine in der Umgebung des Temperatursensors herrschende Temperatur ist.

Beispielsweise kann in Abhängigkeit einer von einem Temperatursensor erfassten Information, die eine herrschende Temperatur im Behandlungsraum von der Vorrichtung repräsentiert, bestimmt werden, ob eine Temperaturerhöhung oder -verringerung stattgefunden hat. Wird beispielsweise seitens der Haushaltseinrichtung ein Reinigungsprogramm durchgeführt, und wird mittels des Temperatursensors eine Temperaturerhöhung erfasst, ist dies beispielsweise indikativ für einen Aufenthalt der Vorrichtung (umfassend den Temperatursensor) innerhalb des Behandlungsraums der Vorrichtung. Ansonsten würde mittels des von der Vorrichtung umfassten Temperatursensors keine Erhöhung oder Verringerung der Temperatur festgestellt werden.

Die Signalstärke ist beispielsweise mittels einer von der Vorrichtung umfassten Kommunikationsschnittstelle ermittelbar und ist indikativ für eine oder mehrere Signale und deren am Ort der Vorrichtung empfangbare Signalstärke. Beispielsweise reduziert sich die Signalstärke von von der Vorrichtung empfangbaren Signalen, die von einer oder mehreren weiteren Kommunikationseinrichtungen ausgesendet werden, durch die Beschaffenheit (insbesondere Metall) des Behandlungsraums der Vorrichtung. Durch das Hineinbringen der Vorrichtung in den Behandlungsraum der Vorrichtung werden Signale durch die Beschaffenheit des Behandlungsraums gedämpft. Diese Reduzierung bzw. Erhöhung der Signalstärke bei einem Hineinbringen bzw. einem Herausnehmen der Vorrichtung in bzw. aus dem Behandlungsraum von der Haushaltseinrichtung kann beispielsweise indikativ für einen Rückschluss darüber sein, ob sich die Vorrichtung innerhalb des Behandlungsraums von der Haushaltseinrichtung befindet oder nicht.

Die Leitfähigkeit kann beispielsweise mittels eines Leitfähigkeitssensors zur Ermittlung der Anwesenheit von Wasser erfasst werden.

Eine weitere beispielhafte Ausgestaltung nach allen Aspekten sieht vor, dass die erfasste Ortsinformation repräsentativ für eine Signalstärke von einem oder mehreren Kommunikationsnetzen ist, wobei die Signalstärke basierend auf von dem einen oder den mehreren Kommunikationsnetzen gesendeten Signalen erfasst wird.

Das eine oder die mehreren drahtlosen Kommunikationsnetze sind z. B. nach dem BT, BLE, WLAN-Standard oder nach einem oder mehreren Mobilfunkstandards, z. B. nach dem Mobilfunkstandard, wie etwa 2G, GPRS, 3G, 4G bzw. LTE, oder zukünftigen weiteren, sogenannten 5G-Mobilfunknetzen ausgebildet und/oder eingerichtet. Das eine oder die mehreren drahtlosen Kommunikationsnetze können jeweils eine oder mehrere Entitäten, wie etwa Router, Access Points, Basisstationen oder dergleichen umfassen, die jeweils Signale aussenden. Diese ausgesendeten Signale sind seitens der Vorrichtung mit einer bestimmten Signalstärke empfangbar. Dabei verändert sich die Signalstärke in Abhängigkeit des Aufenthaltsortes der Vorrichtung. Derart kann die Signalstärke indikativ für einen Aufenthaltsort der Vorrichtung sein.

In einer beispielhaften Ausgestaltung nach allen Aspekten umfasst das Bestimmen der Behandlungsinformation ein Bestimmen einer Signaldämpfung zumindest teilweise basierend auf der erfassten Information, die eine Signalstärke der einen oder mehreren Kommunikationsnetze repräsentiert.

Das Bestimmen der Signaldämpfung erfolgt beispielsweise basierend auf einer Veränderung des Aufenthaltsortes der Vorrichtung, wodurch sich die Signalstärke von von den einen oder mehreren Kommunikationsnetzen ausgesendeten Signalen verändert, z. B. gedämpft wird. Alternativ oder zusätzlich kann das Bestimmen der Signaldämpfung basierend auf Signalen von nur einem oder mehreren vorausgewählten Kommunikationsnetzen, z. B. einem WLAN-Kommunikationsnetz erfolgen. Da in der Regel insbesondere Signale, die von einem WLAN-Kommunikationsnetz stammen, am Aufstellort von einem Haushalt umfassten Haushaltseinrichtung empfangbar sind, kann es vorteilhaft sein, sich auf Signale von einem derartigen WLAN-Kommunikationsnetz zu beschränken.

Zum Bestimmen, ob eine Signaldämpfung vorliegt, können beispielsweise zwei Messungen, die in einem zeitlichen Abstand voneinander durchgeführt werden, erfolgen. Z. B. kann eine erste Messung als Kalibrierung (innerhalb oder außerhalb des Behandlungsraums von der Haushaltseinrichtung) durchgeführt werden, und anschließend kann eine zweite Messung erfolgen, um eine Veränderung gegenüber der ersten Messung zu Erfassen. Es können ferner beispielsweise eine oder mehrere von derartigen zweiten Messungen im Anschluss an die erste Kalibrierungsmessung durchgeführt werden. Für den Fall, dass mehrere weitere Messungen im Anschluss an die erste Messung erfolgen, können diese beispielsweise stetig oder diskret (z. B. in vorbestimmten Zeitabständen) durchgeführt werden.

In einer weiteren beispielhaften Ausgestaltung nach allen Aspekten wird die Behandlungsrauminformation ferner zumindest teilweise basierend auf einer oder mehreren der folgenden erfassten Eingaben i) und ii) bestimmt:
i) eine oder mehrere Nutzereingaben; und
ii) eine oder mehrere über eine Kommunikationsschnittstelle von der zumindest einen Vorrichtung erfassten Eingabe.

Die eine oder mehreren Nutzereingaben können beispielsweise seitens eines Nutzergerätes erfasst werden. Ein derartiges Nutzergerät ist beispielsweise eine von der Vorrichtung separate Entität. Das Nutzergerät ist beispielsweise ein mobiles Gerät (z. B. Smartphone, Tablet, Wearable, loT (Internet-of-Things) Gerät, um nur einige nicht-limitierende Beispiele zu nennen). Das Nutzergerät ist beispielsweise transportable, wiegt beispielsweise weniger als 5, 4, 3, 2, oder 1 kg.

Die Kommunikationsschnittstelle stellt beispielsweise eine Schnittstelle zwischen zumindest zwei Entitäten (z. B. Haushaltseinrichtung und Vorrichtung, und/oder Nutzergerät und Vorrichtung, und/oder Server und Vorrichtung, um nur einige mögliche und nicht-limitierende Kombinationen zu nennen) bereit. Ferner ermöglicht die Kommunikationsschnittstelle beispielsweise eine Schnittstelle, um zwei Entitäten, die jeweils an einem unterschiedlichen Kommunikationsnetz angebunden sind, miteinander zu verbinden, so dass insbesondere eine (bi-) direktionale Kommunikation zwischen den zumindest zwei Entitäten ermöglicht ist. Es versteht sich, dass ferner weitere Entitäten über die Schnittstelleneinrichtung mit der zumindest einen Haushaltseinrichtung und/oder dem zumindest einen Server verbunden sein können.

In einer beispielhaften Ausgestaltung nach allen Aspekten umfasst die Kommunikationsschnittstelle zumindest einen Transceiver zur Kommunikation mit der zumindest einen Haushaltseinrichtung (z. B. nach dem BT, BLE, WLAN-Standard), und optional einen oder mehrere weitere Transceiver zur Kommunikation mit einer oder mehreren weiteren Entitäten, wie z. B. dem Nutzergerät und/oder dem zumindest einen Server. Der eine oder die mehreren weiteren Transceiver sind beispielsweise nach dem Mobilfunk (2G, GPRS, 3G, LTE, 5G) Standard eingerichtet und/oder ausgebildet.

Alternativ oder zusätzlich kann beispielsweise eine direkte Kommunikation mit einer von der Vorrichtung verschiedenen Entität (z. B. Nutzergerät) erfolgen.

Ferner kann eine Kommunikation zwischen der Vorrichtung und einem Eingabeassistenzgerät mit Hilfe der Kommunikationsschnittstelle der Vorrichtung erfolgen. Das zumindest eine Eingabeassistenzgerät ist beispielsweise eine Spracheingabeassistenzvorrichtung, wie z. B. das unter der Bezeichnung Alexa vertriebene Produkt des Herstellers Amazon, ein Home Appliance Server (wie etwa ein Smart Home System, um nur ein nicht-limitierendes Beispiel zu nennen). Die Spracheingabeassistenzvorrichtung kann beispielsweise ein Erfassen von zumindest einem Sprachbefehl indikativ für zumindest einen Parameter, auf dessen Basis zumindest teilweise die Behandlungsrauminformation und/oder eine Steuerung und/oder Regelung der Haushaltseinrichtung erfolgen kann, durchführen.

Der Sprachbefehl kann beispielsweise von einem Benutzer eingegeben werden, z. B. über eine Sprachkommunikationsschnittstelle (z. B. ein ein Mikrofon umfassendes elektronisches Gerät oder dergleichen). Der eingegebene Sprachbefehl kann dabei beispielsweise lokal seitens der Sprachkommunikationsschnittstelle oder seitens eines Servers verarbeitet werden. Zur Verarbeitung seitens eines Servers kann der Sprachbefehl beispielsweise nach der Eingabe über eine Kommunikationsverbindung des Eingabeassistenzgerätes z. B. an einen Server übermittelt werden. Mittels einer Spracherkennungssoftware kann der eingegebene Sprachbefehl beispielsweise verarbeitet werden. Dafür kann die Installation zusätzlicher Software erforderlich sein. Ein derart verarbeiteter Sprachbefehl kann beispielsweise in einen Steuerparameter umgewandelt werden, die das Nutzergerät und/oder die zumindest eine Haushaltseinrichtung beispielsweise auswerten, verarbeiten, weiterleiten, oder in sonstiger Weise benutzen kann.

Das Bestimmen der Behandlungsrauminformation kann insbesondere basierend auf sämtlichen verfügbaren und vorstehend aufgeführten Informationen erfolgen.

Eine beispielhafte Ausgestaltung nach allen Aspekten sieht vor, dass die Ortsinformation ferner im Rahmen einer von der Haushaltseinrichtung durchgeführten Behandlung von in den Behandlungsraum eingebrachten Gegenständen erfasst wird.

Die Ortsinformation wird beispielsweise während einer von der Haushaltseinrichtung durchgeführten Behandlung von in den Behandlungsraum eingebrachten Gegenständen erfasst. Die Behandlung von in den Behandlungsraum der Haushaltseinrichtung eingebrachten Gegenständen erfolgt beispielsweise durch ein Durchführen eines Reinigungsprogramms von der Haushaltseinrichtung. Beispielsweise kann die Ortsinformation durch einen oder mehrere Sensoren, die jeweils eine oder mehrere Informationen erfassen, erfasst werden. Beispielsweise können der eine oder die mehreren Sensoren Informationen indikativ für Lichtintensität, akustische Signale, Leitfähigkeit, Beschleunigung, Temperatur, Signalstärke, oder eine Kombination hiervon erfassen. Insbesondere kann hierdurch ein Rückschluss über die Anwesenheit von Wasser zumindest teilweise basierend auf einer Information indikativ für eine Leitfähigkeit, und/oder über die Temperatur, und/oder über mechanische Eigenschaften (z. B. Bewegung) der Vorrichtung erfolgen, so dass über den Aufenthaltsort der Vorrichtung ein Rückschluss ermittelt werden kann. Für den Fall der Anwesenheit von Wasser kann beispielsweise angenommen werden, dass sich die Vorrichtung innerhalb des Behandlungsraums der Haushaltseinrichtung befindet.

Eine beispielhafte Ausgestaltung nach allen Aspekten sieht vor, dass das Verfahren ferner umfasst:
- Bestimmen einer Steuerungsinformation zumindest teilweise basierend auf der bestimmten Behandlungsinformation; und
- Ausgeben bzw. Veranlassen des Ausgebens der bestimmten Steuerungsinformation und/oder Durchführen bzw. Veranlassen eines Durchführens einer Aktion zumindest teilweise basierend auf der bestimmten Steuerungsinformation.

In einer beispielhaften Ausgestaltung nach allen Aspekten umfasst die Aktion eine Kommunikation mit der Haushaltseinrichtung und optional mit einem oder mehreren weiteren Entitäten, z. B. weiteren Haushaltseinrichtungen, oder Einrichtungen wie Smart Home Server, oder Server-Clouds im Internet.

Die Kommunikation mit der Haushaltseinrichtung und optional mit einem oder mehreren weiteren Geräten ist beispielweise eine Kommunikation über ein drahtloses oder drahtgebundenes Kommunikationsnetz.

Die Steuerungsinformation kann beispielsweise ferner eine Steuerung und/oder Regelung der Vorrichtung bewirken. Die Steuerungsinformation kann beispielsweise ferner eine Steuerung und/oder Regelung der Haushaltseinrichtung bewirken, wie z. B. ein Ein- und/oder Ausschalten der Haushaltseinrichtung. In Bezug auf ein Ein- und/oder Ausschalten der Haushaltseinrichtung kann beispielsweise beeinflusst werden, ob (überhaupt) die Haushaltseinrichtung ein- und/oder ausgeschaltet wird und/oder zu welchem Zeitpunkt (Zeit, Datum, oder sofort wenn die Vorrichtung innerhalb des Behandlungsraums der Vorrichtung ist) die Haushaltseinrichtung ein- und/oder ausgeschaltet wird.

Ferner kann die Aktion ein Beeinflussen des Betriebsmodus (z. B. Art des Reinigungsprogramms) der Haushaltseinrichtung bewirken. Dies besteht beispielsweise darin, dass ein bestimmtes (z. B. vorprogrammiertes) Programm ausgewählt wird, dass Zusatzprogramme durchlaufen werden, dass die Programmlaufzeit beeinflusst wird (z. B. verlängert oder verkürzt) wird, dass einzelne Parameter des Reinigungsprogramms (im Falle einer Waschmaschine beispielsweise die Temperatur, die Schleudergeschwindigkeit, oder dergleichen) geändert werden. Hierzu können beispielsweise weitere Informationen, die seitens der Vorrichtung erfasst werden können (Art der Gegenstände in dem Behandlungsraum, Füllgrad des Behandlungsraums, um nur einige nicht-limitierende Beispiele zu nennen) ausgewertet werden bzw. das Bestimmen der Steuerungsinformation basiert ferner zumindest teilweise auf derartigen Informationen.

Zusätzlich oder alternativ ist es möglich, dass die Aktion zudem dem Nutzer eine Empfehlung betreffend die Vorrichtung und/oder die Haushaltseinrichtung ausgibt. So kann es beispielsweise möglich sein, dass zusätzlich zu einer automatisierten Anpassung von Parametern eines Reinigungsprogramms von der Haushaltseinrichtung auch eine manuelle Vorbehandlung (beispielsweise von Kleidung, Geschirr, oder dergleichen) notwendig ist. Eine derartige Empfehlung kann dem Nutzer beispielsweise mittels des Nutzergerätes angezeigt bzw. mitgeteilt werden.

Die Steuerungsinformation kann beispielsweise einen oder mehrere Ausgabeparameter umfassen. Beispiele für einen Ausgabeparameter sind eine Ausgabemenge, ein Ausgabezeitpunkt, eine Ausgabetemperatur und/oder eine Ausgabedauer. Beispielsweise gibt ein Ausgabeparameter eine Ausgabemenge, einen Ausgabezeitpunkt, eine Ausgabetemperatur und/oder eine Ausgabedauer für das Ausgeben einer Zubereitung, die von der Vorrichtung bevorratet wird, vor. Dass die Steuerungsinformation eingerichtet ist, das Ausgeben zumindest teilweise zu steuern, soll beispielsweise derart verstanden werden, dass die Steuerungsinformation bewirkt, dass die Zubereitung entsprechend den durch die Steuerungsinformation vorgegebenen Ausgabeparametern ausgegeben wird.

Zusätzlich oder alternativ umfasst oder repräsentiert die Aktion beispielsweise einen sicherheitsrelevanten Parameter, z. B. ob eine den Behandlungsraum der Haushaltseinrichtung verschließende Tür geöffnet oder geschlossen ist, ob die Vorrichtung sich außerhalb des Behandlungsraums der Haushaltseinrichtung befindet, ob ein Wasseranschluss mit der Haushaltseinrichtung zur Zuführung von Wasser in den Behandlungsraum mit der Haushaltseinrichtung verbunden ist oder nicht, ob ein Energiespeicher der Vorrichtung einen bestimmten Ladezustand aufweist, oder dergleichen, um nur einige nicht-limitierende Beispiele zu nennen.

Die Aktion kann beispielsweise eine Kommunikation mit weiteren von der Vorrichtung verschiedenen Entitäten (z. B. Haushaltseinrichtung, Nutzergerät, Server, oder eine Kombination hiervon) erfordern, oder auf eine Aktion die ausschließlich seitens der Vorrichtung selber durchführbar ist, begrenzt sein.

In einer weiteren beispielhaften Ausgestaltung nach allen Aspekten repräsentiert die bestimmte Behandlungsrauminformation, ob sich behandelte Gegenstände und/oder die zumindest Vorrichtung nach einer durchgeführten Behandlung seitens der Haushaltseinrichtung weiterhin innerhalb des Behandlungsraums von der Haushaltseinrichtung befinden oder nicht.

Beispielsweise kann dann zumindest teilweise basierend auf der Behandlungsrauminformation eine Aktion seitens der Vorrichtung und/oder seitens der Haushaltseinrichtung, wie etwa eine Meldung an den Nutzer erfolgen, wenn z. B. behandelte Gegenstände (z. B. Wäsche oder Geschirr) in dem Behandlungsraum vergessen wurde, oder wenn unbehandelte Gegenstände für eine bestimmte Zeit (z. B. zu lange) in dem Behandlungsraum gelagert werden, kann ein sich mitunter entwickelnder Schlechtgeruch beispielsweise durch ein Dosieren von Hygiene- und/oder Duftmitteln zumindest teilweise neutralisiert werden.

Eine beispielhafte Ausgestaltung nach allen Aspekten sieht vor, dass die zumindest eine Vorrichtung eine Dosiervorrichtung ist.

Eine derartige Dosiervorrichtung wird beispielsweise vor dem Start einer Behandlung von Gegenständen in dem Behandlungsraum von der Haushaltseinrichtung (z. B. ein Waschvorgang) in den Behandlungsraum (z. B. die Waschtrommel einer Waschmaschine) gelegt. Beispielsweise umfasst eine derartige Vorrichtung Mittel zum Dosieren von in der Dosiervorrichtung bevorrateter Zubereitung. Die Dosiervorrichtung ist insbesondere nach dem ersten und/oder zweiten Aspekt der vorliegenden Erfindung eingerichtet und/oder ausgebildet.

Eine weitere beispielhafte Ausgestaltung nach allen Aspekten sieht vor, dass das Verfahren ferner zumindest teilweise von einem Server durchgeführt wird.

Insbesondere können einzelne Verfahrensschritte (z. B. das Bestimmen der Behandlungsrauminformation, und/oder das Bestimmen der Steuerungsinformation) seitens des Servers durchgeführt werden. Alternativ kann eine Server-Cloud, umfassend mindestens zwei in Verbindung miteinander stehende (z. B. kommunizierende) Server, zumindest einen oder mehrere (Teil-) Schritte des Verfahrens nach dem ersten Aspekt der Erfindung durchführen.

Gemäß dem zweiten Aspekt der Erfindung wird auch eine alternative Vorrichtung beschrieben, umfassend zumindest einen Prozessor und zumindest einen Speicher mit Computerprogrammcode, wobei der zumindest eine Speicher und der Computerprogrammcode dazu eingerichtet sind, mit dem zumindest einen Prozessor zumindest ein Verfahren gemäß dem ersten Aspekt auszuführen und/oder zu steuern. Unter einem Prozessor soll zum Beispiel eine Kontrolleinheit, ein Mikroprozessor, eine Mikrokontrolleinheit wie ein Mikrocontroller, ein digitaler Signalprozessor (DSP), eine anwendungsspezifische Integrierte Schaltung (ASIC) oder ein Field Programmable Gate Arrays (FPGA) verstanden werden.

Zum Beispiel umfasst eine beispielhafte Vorrichtung ferner Mittel zum Speichern von Informationen wie einen Programmspeicher und/oder einen Hauptspeicher. Zum Beispiel umfasst eine beispielhafte erfindungsgemäße Vorrichtung ferner jeweils Mittel zum Empfangen und/oder Senden von Informationen über ein Netzwerk wie eine Netzwerkschnittstelle. Zum Beispiel sind beispielhafte erfindungsgemäße Vorrichtungen über ein oder mehrere Netzwerke miteinander verbunden und/oder verbindbar.

Eine beispielhafte Vorrichtung gemäß dem zweiten Aspekt ist oder umfasst etwa eine Datenverarbeitungsanlage, die softwaremäßig und/oder hardwaremäßig eingerichtet ist, um die jeweiligen Schritte eines beispielhaften Verfahrens gemäß dem zweiten Aspekt ausführen zu können. Beispiele für eine Datenverarbeitungsanlage sind ein Computer, ein Desktop-Computer, ein Server, ein Thinclient und/oder ein tragbarer Computer (Mobilgerät), wie etwa ein Laptop-Computer, ein Tablet-Computer, ein Wearable, ein persönlicher digitaler Assistent oder ein Smartphone.

Eine beispielhafte Ausgestaltung nach allen Aspekten sieht vor, dass die Vorrichtung ein Dosiergerät ist.

Weitere Vorrichtungen können vorgesehen sein, beispielswiese ein Server und/oder beispielsweise ein Teil bzw. eine Komponente einer sogenannten Computer Cloud, welche Datenverarbeitungsressourcen dynamisch für verschiedene Nutzer in einem Kommunikationssystem bereitstellt. Unter einer Computer Cloud wird insbesondere eine Datenverarbeitungs-Infrastruktur gemäß der Definition des "National Institute for Standards and Technology" (NIST) für den englischen Begriff "Cloud Computing" verstanden. Ein Beispiel einer Computer Cloud ist eine Microsoft Windows Azure Platform.

Gemäß dem zweiten Aspekt der Erfindung wird auch ein Computerprogramm beschrieben, das Programmanweisungen umfasst, die einen Prozessor zur Ausführung eines Verfahrens gemäß dem ersten Aspekt veranlassen, wenn das Computerprogramm auf dem Prozessor läuft. Ein beispielhaftes Programm gemäß der Erfindung kann in oder auf einem computerlesbaren Speichermedium gespeichert sein, welches eines oder mehrere Programme enthält.

Gemäß dem zweiten Aspekt der Erfindung wird auch ein computerlesbares Speichermedium beschrieben, welches ein Computerprogramm gemäß dem zweiten Aspekt enthält. Ein computerlesbares Speichermedium kann z. B. als magnetisches, elektrisches, elektromagnetisches, optisches und/oder andersartiges Speichermedium ausgebildet sein. Ein solches computerlesbares Speichermedium ist vorzugsweise gegenständlich (also "berührbar"), zum Beispiel ist es als Datenträgervorrichtung ausgebildet. Eine solche Datenträgervorrichtung ist beispielsweise tragbar oder in einer Vorrichtung fest installiert. Beispiele für eine solche Datenträgervorrichtung sind flüchtige oder nicht-flüchtige Speicher mit wahlfreiem-Zugriff (RAM) wie z. B. NOR-Flash-Speicher oder mit sequentiellen-Zugriff wie NAND-Flash-Speicher und/oder Speicher mit Nur-Lese-Zugriff (ROM) oder Schreib-Lese-Zugriff. Computerlesbar soll zum Beispiel so verstanden werden, dass das Speichermedium von einem Computer bzw. einer Datenverarbeitungsanlage (aus)gelesen und/oder beschrieben werden kann, beispielsweise von einem Prozessor.

Gemäß einem dritten Aspekt der Erfindung wird auch ein System beschrieben, umfassend mehrere Vorrichtungen, insbesondere eine Haushaltseinrichtung und eine weitere hiervon separate Vorrichtung, welche dazu eingerichtet sind, zusammen ein Verfahren gemäß dem ersten Aspekt durchführen.

Ein beispielhaftes System gemäß dem dritten Aspekt umfasst eine beispielhafte Haushaltseinrichtung und zusätzlich eine weitere Vorrichtung, beispielsweise ein mobiles Gerät oder einen Server zur zumindest teilweise (d. h. zumindest einen Verfahrensschritt des Verfahrens nach dem ersten Aspekt) Durchführung eines beispielhaften Verfahrens gemäß dem ersten Aspekt.

Eine weitere beispielhafte Ausgestaltung nach allen Aspekten ist dadurch gekennzeichnet, dass der von dem zumindest einen Server bereitgestellte Dienst ein Cloud-Dienst ist.

Derartige Cloud-Dienste werden beispielsweise unter den Bezeichnungen "BSH-Cloud", "Alexa-Cloud", "PLUME-Cloud", "Henkel-Cloud", "Smarthome-Cloud", um nur einige nicht-limitierende Beispiele zu nennen, bereitgestellt.

Der Cloud-Dienst ist beispielsweise dadurch charakterisiert, dass der Cloud-Dienst für eine Vielzahl von verschiedenen Nutzern Daten speichert und synchronisiert bereitstellt, so dass die Daten von einem oder mehreren Entitäten genutzt werden können. Ferner kann der Cloud-Dienst unterschiedliche Dienste, wie beispielsweise ein Speichern von nutzerindividuellen Informationen, ein Aggregieren von Informationen unterschiedlicher Nutzer, oder dergleichen Dienste für die Vielzahl von Nutzern bereitstellen. Die Dienste können dabei einen Komfort für den Nutzer erhöhen, da beispielsweise Informationen ohne ein Zutun des Nutzers auf unterschiedlichen Entitäten (des Nutzers) verfügbar sind. Beispielsweise kann die zumindest eine Haushaltseinrichtung eine Statusinformation repräsentativ z. B. für den Fortschritt eines von der zumindest einen Haushaltseinrichtung durchgeführten Wasch- oder Reinigungsprogramms speichern. Anschließend kann der Nutzer diesen Status beispielsweise von seinem Nutzergerät aus abfragen. Es versteht sich, dass sich die Nutzung des Cloud-Dienstes nicht auf die Wiedergabe von Informationen beschränkt.

Die zuvor in dieser Beschreibung beschriebenen beispielhaften Ausgestaltungen der vorliegenden Erfindung sollen auch in allen Kombinationen miteinander offenbart verstanden werden. Insbesondere sollen beispielhafte Ausgestaltungen in Bezug auf die unterschiedlichen Aspekten offenbart verstanden werden.

Insbesondere sollen durch die vorherige oder folgende Beschreibung von Verfahrensschritten gemäß bevorzugter Ausführungsformen eines Verfahrens auch entsprechende Mittel zur Durchführung der Verfahrensschritte durch bevorzugte Ausführungsformen einer Vorrichtung offenbart sein. Ebenfalls soll durch die Offenbarung von Mitteln einer Vorrichtung zur Durchführung eines Verfahrensschrittes auch der entsprechende Verfahrensschritt offenbart sein.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren, zu entnehmen. Die Figuren sollen jedoch nur dem Zwecke der Verdeutlichung, nicht aber zur Bestimmung des Schutzbereiches der Erfindung dienen. Die Figuren sind nicht maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung erachtet werden.

### Kurze Beschreibung der Figuren

In der Zeichnung zeigt
- Fig. 1: eine schematische Darstellung eines Ausführungsbeispiels eines Systems gemäß dem dritten Aspekt der Erfindung;
- Fig. 2: ein Blockdiagramm eines Ausführungsbeispiels einer Vorrichtung gemäß dem zweiten Aspekt der Erfindung zur Durchführung eines Ausführungsbeispiels eines Verfahrens gemäß der Erfindung; und
- Fig. 3: ein Ablaufdiagramm eines Ausführungsbeispiels gemäß einem Verfahren nach dem ersten Aspekt der Erfindung; und
- Fig. 4: unterschiedliche Ausführungsbeispiele eines Speichermediums nach dem zweiten Aspekt der Erfindung.

Detaillierte Beschreibung einiger beispielhafter Ausführungsformen der Erfindung

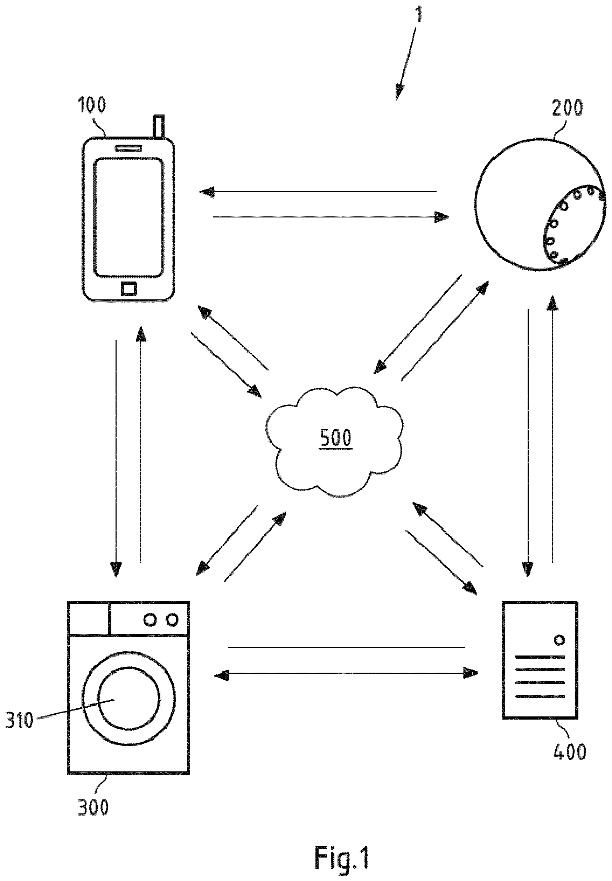

Fig. 1 zeigt zunächst eine schematische Darstellung eines Ausführungsbeispiels eines Systems 1 gemäß der Erfindung umfassend die Vorrichtungen 100, 200, 300 und 400. Das System 1 ist zur Ausführung von beispielhaften Verfahren gemäß der Erfindung eingerichtet. Die Vorrichtung 200 ist eine beispielhafte mobile Vorrichtung 200, welche in diesem Fall in den Behandlungsraum 310 der Haushaltseinrichtung 300 (hier beispielhaft als Waschmaschine ausgebildet) eingebracht werden kann. Sowohl die Vorrichtung 200 als auch die Waschmaschine 300 können jeweils eine Vorrichtung gemäß der Erfindung sein. Weiterhin umfasst das System 1 als weitere Vorrichtung das Mobilgerät 100 in Form eines Smartphones, Tablets, Wearables, oder dergleichen (hier beispielhaft als Smartphone ausgebildet). Auch das Mobilgerät 100 kann eine Vorrichtung gemäß der Erfindung sein oder einzelne Schritte beispielhafter Verfahren gemäß der Erfindung ausführen. Die Vorrichtung 100 kann jedoch ebenfalls ein Computer, ein Desktop-Computer oder ein tragbarer Computer, wie etwa ein Laptop-Computer, ein Tablet-Computer, ein persönlicher digitaler Assistent (PDA) sein. Zusätzlich oder alternativ zu den Vorrichtungen 300 und 100 kann das System auch einen Server 400 umfassen. Ebenfalls ist denkbar, dass das System 1 auch weniger oder mehr als drei Vorrichtungen umfasst.

Während die hier beschriebenen Beispiele insbesondere in Zusammenhang mit einer Haushaltseinrichtung 300 in Form einer Waschmaschine beschrieben sind, gelten die Ausführungen aber sinngemäß auch für andere Arten von Haushalteinrichtungen, wie z. B. einer Spülmaschine, einem Wäschetrockner, einer Toilette oder dergleichen.

Jede der Vorrichtungen 100, 200, 300, 400 kann eine Kommunikationsschnittstelle aufweisen, um mit einer oder mehreren der anderen Vorrichtungen zu kommunizieren bzw. Informationen auszutauschen, z. B. direkt über eine drahtlose (Bluetooth, WLAN, Zigbee, NFC, um nur einige nicht-limitierende Beispiele zu nennen) und/oder drahtgebundene (LAN) Verbindung, und/oder über ein Kommunikationsnetz 500, wie z. B. das Internet, und/oder einem lokalen Netzwerk, das die Vorrichtungen 100, 200, 300 abdeckt.

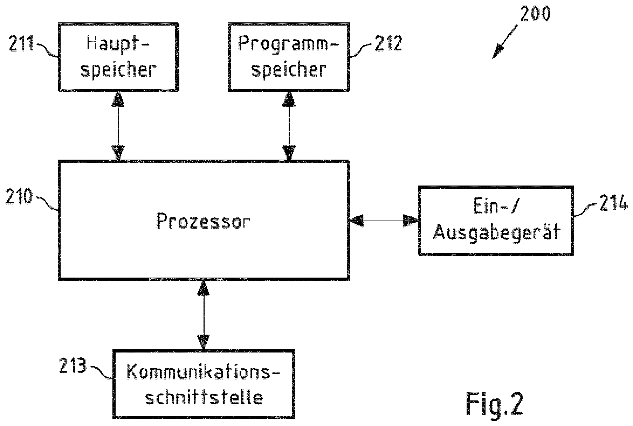

Fig. 2 zeigt nun ein Blockdiagramm 200 eines Ausführungsbeispiels einer Vorrichtung gemäß der Erfindung zur Durchführung eines Ausführungsbeispiels eines Verfahrens gemäß der Erfindung. Das Blockdiagramm 200 aus Fig. 2 kann dabei beispielhaft sowohl für die in Fig. 1 dargestellte Vorrichtung 200, die dargestellte Waschmaschine 300, das dargestellte Mobilgerät 100 (oder ein Teil hiervon), oder den dargestellten Server 400 sein.

Prozessor 210 der Vorrichtung 200 ist insbesondere als Mikroprozessor, Mikrokontrolleinheit, Mikrocontroller, digitaler Signalprozessor (DSP), Anwendungsspezifische Integrierte Schaltung (ASIC) oder Field Programmable Gate Array (FPGA) ausgebildet.

Prozessor 210 führt Programmanweisungen aus, die in Programmspeicher 212 gespeichert sind, und speichert beispielsweise Zwischenergebnisse oder ähnliches in Arbeits- oder Hauptspeicher 211. Zum Beispiel ist Programmspeicher 212 ein nicht-flüchtiger Speicher wie ein Flash-Speicher, ein Magnetspeicher, ein EEPROM-Speicher (elektrisch löschbarer programmierbarer Nur-LeseSpeicher) und/oder ein optischer Speicher. Hauptspeicher 211 ist zum Beispiel ein flüchtiger oder nicht-flüchtiger Speicher, insbesondere ein Speicher mit wahlfreiem-Zugriff (RAM) wie ein statischer RAM-Speicher (SRAM), ein dynamischer RAM-Speicher (DRAM), ein ferroelektrischer RAM-Speicher (FeRAM) und/oder ein magnetischer RAM-Speicher (MRAM).

Programmspeicher 212 ist vorzugsweise ein lokaler mit der Vorrichtung 200 fest verbundener Datenträger. Mit der Vorrichtung 200 fest verbundene Datenträger sind beispielsweise Festplatten, die in die Vorrichtung 200 eingebaut sind. Alternativ kann der Datenträger beispielsweise auch ein mit der Vorrichtung 200 trennbar verbindbarer Datenträger sein.

Programmspeicher 212 enthält beispielsweise das Betriebssystem von der Vorrichtung 200, das beim Starten der Vorrichtung 200 zumindest teilweise in Hauptspeicher 211 geladen und vom Prozessor 210 ausgeführt wird. Insbesondere wird beim Starten von Vorrichtung 20 zumindest ein Teil des Kerns des Betriebssystems in den Hauptspeicher 211 geladen und von Prozessor 210 ausgeführt.

Das Betriebssystem ermöglicht insbesondere die Verwendung der Vorrichtung 200 zur Datenverarbeitung. Es verwaltet beispielsweise Betriebsmittel wie Hauptspeicher 211 und Programmspeicher 212, Kommunikationsschnittstelle 213, Ein- und Ausgabegerät 214, stellt unter anderem durch Programmierschnittstellen anderen Programmen grundlegende Funktionen zur Verfügung und steuert die Ausführung von Programmen.

Prozessor 210 steuert zudem die Kommunikationsschnittstelle 213, welche beispielsweise eine Netzwerkschnittstelle sein kann und als Netzwerkkarte, Netzwerkmodul und/oder Modem ausgebildet sein kann. Die Kommunikationsschnittstelle 213 ist insbesondere dazu eingerichtet, eine Verbindung der Vorrichtung 200 mit anderen Vorrichtungen (z. B. Mobilgerät 100, Haushaltseinrichtung 300, und/oder Server 400 nach Fig. 1), insbesondere über ein (drahtloses) Kommunikationssystem (z. B. Kommunikationsnetz 500 nach Fig. 1), beispielsweise ein Netzwerk, herzustellen und mit diesen zu kommunizieren. Die Kommunikationsschnittstelle 213 kann beispielsweise Daten (über das Kommunikationssystem) empfangen und an Prozessor 210 weiterleiten und/oder Daten von Prozessor 210 empfangen und (über das Kommunikationssystem) senden. Beispiele für ein Kommunikationssystem sind ein lokales Netzwerk (LAN), ein großräumiges Netzwerk (WAN), ein drahtloses Netzwerk (beispielsweise gemäß dem IEEE-802.11-Standard, dem Bluetooth (LE)-Standard und/oder dem NFC-Standard), ein drahtgebundenes Netzwerk, ein Mobilfunknetzwerk, ein Telefonnetzwerk und/oder das Internet. Beispielsweise kann mittels der Kommunikationsschnittstelle 213 mit dem Internet und/oder anderen Vorrichtungen kommuniziert werden. Im Falle der Vorrichtungen 100, 300, 400 kann mittels der jeweiligen Kommunikationsschnittstelle 213 beispielsweise mit den jeweiligen anderen Vorrichtungen 100, 300, 400 oder dem Internet kommuniziert werden.

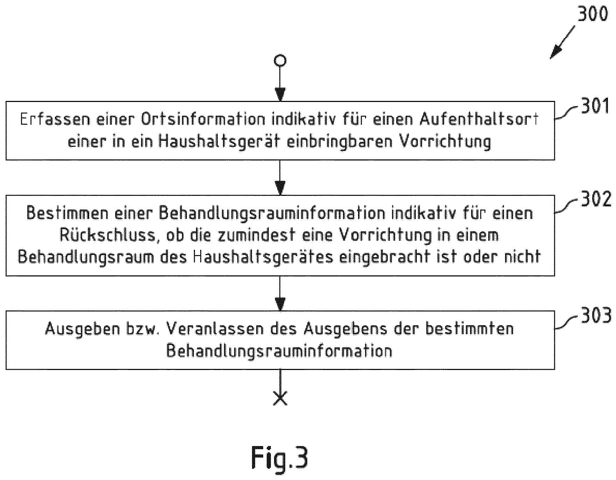

Über eine derartige Kommunikationsschnittstelle 213 kann insbesondere eine Ortsinformation (vgl. Schritt 301 nach Fig. 3) und/oder eine bestimmte Behandlungsinformation (vgl. Schritt 302 nach Fig. 3), die einen Rückschluss ermöglicht, ob die Vorrichtung 200 in einen Behandlungsraum (z. B. Behandlungsraum 310 nach Fig. 1) einer Haushaltseinrichtung (z. B. Waschmaschine 300 nach Fig. 1) eingebracht ist oder nicht, empfangen und/oder gesendet werden. Weiterhin kann mittels der dargestellten Komponenten (und bei Bedarf weiterer Komponenten) eine Steuerung und/oder Regelung einer Haushaltseinrichtung (z. B. Waschmaschine 300 nach Fig. 1) und/oder der Vorrichtung (z. B. Vorrichtung 200 nach Fig. 1) unter Berücksichtigung der erhaltenen Behandlungsinformation erfolgen.

Des Weiteren kann Prozessor 210 zumindest ein Ein-/Ausgabegerät 214 steuern. Ein-/Ausgabegerät 214 ist beispielsweise eine Tastatur, eine Maus, eine Anzeigeeinheit, ein Mikrofon, eine berührungsempfindliche Anzeigeeinheit, ein Lautsprecher, ein Lesegerät, ein Laufwerk und/oder eine Kamera. Das Ein-/Ausgabegerät 214 kann beispielsweise Eingaben eines Nutzers aufnehmen und an Prozessor 210 weiterleiten und/oder Informationen für den Nutzer von Prozessor 210 empfangen und ausgeben.

Schließlich kann die Vorrichtung 200 noch zumindest einen Beschleunigungssensor (in Fig. 2 nicht dargestellt), und optional einen oder mehrere weitere Sensoren (in Fig. 2 nicht dargestellt) umfassen. Einer der einen oder mehreren weiteren Sensoren ist beispielsweise ein GPS-Modul, um auf diese Weise, eine Ortsinformation der entsprechenden Vorrichtung zu erhalten. Ein weiteres Beispiel eines weiteren Sensors ist ein Temperatursensor, ein Leitfähigkeitssensor, und/oder ein optischer Sensor, um eine Temperaturinformation, eine Leitfähigkeitsinformation, und/oder eine optische Information (z. B. eine Lichtintensität repräsentierend) zu erhalten.

Fig. 3 zeigt ein Ablaufdiagramm 100 eines Ausführungsbeispiels eines Verfahrens gemäß dem ersten Aspekt, welches durch eine Vorrichtung, beispielsweise Vorrichtung 200 aus Fig. 2 bzw. Vorrichtung 200 aus Fig. 1 durchgeführt wird.

In einem ersten Schritt 301 erfolgt ein Erfassen einer Ortsinformation indikativ für einen Aufenthaltsort einer in eine Haushaltseinrichtung (z. B. Haushaltseinrichtung 300 nach Fig. 1) einbringbaren Vorrichtung (z. B. Vorrichtung 200 nach Fig. 1). Die Ortsinformation wird beispielsweise von einem oder mehreren Sensoren, die die Vorrichtung 200 umfasst, erfasst.

Die Ortsinformation repräsentiert beispielsweise einen oder mehrere der folgenden Parameter i) bis vi):
i) Lichtintensität;
ii) akustisches Signal;
iii) Leitfähigkeit;
iv) Beschleunigung;
v) Temperatur; und
vi) Signalstärke bzw. Signaldämpfung.

Entsprechend kann die Vorrichtung (z. B. Vorrichtung 200 nach Fig. 1) beispielsweise einen oder mehrere Lichtsensoren (Lichtintensität), Mikrofone (akustisches Signal), Leitfähigkeitssensoren (Leitfähigkeit), Temperatursensoren (Temperatur), Kommunikationsschnittstellen (Signalstärke kann aus empfangenen Signalen des Kommunikationsnetzen abgeleitet werden), oder eine Kombination hiervon umfassen.

In einem zweiten Schritt 302 erfolgt ein Bestimmen einer Behandlungsinformation indikativ für einen Rückschluss, ob die zumindest eine Vorrichtung in einen Behandlungsraum (z. B. Behandlungsraum 310 der Haushaltseinrichtung 300 nach Fig. 1) des Haushaltgerätes eingebracht ist oder nicht. Die Behandlungsrauminformation wird zumindest teilweise basierend auf der erfassten Ortsinformation (vgl. Schritt 301) bestimmt wird.

In einem dritten Schritt 303 erfolgt ein Ausgeben bzw. ein Veranlassen des Ausgebens der bestimmten Behandlungsinformation, z. B. von der Vorrichtung 200 nach Fig. 1 an einen Server (z. B. Server 400 nach Fig. 1) und/oder an die Haushaltseinrichtung (z. B. Haushaltseinrichtung 300 nach Fig. 1). Die Ausgabe bzw. das Veranlassen des Ausgebens der bestimmten Behandlungsinformation kann beispielsweise über ein Kommunikationsnetz erfolgen, z. B. über das Kommunikationsnetz 500 nach Fig. 1.

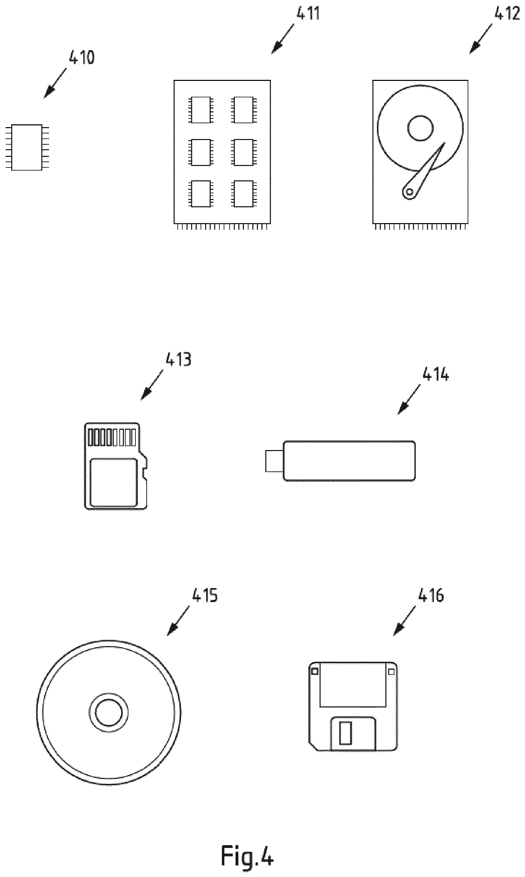

Fig.4 zeigt schließlich unterschiedliche Ausführungsbeispiele von Speichermedien, auf denen ein Ausführungsbeispiel eines erfindungsgemäßen Computerprogrammes gespeichert sein kann. Das Speichermedium kann beispielsweise ein magnetisches, elektrisches, optisches und/oder andersartiges Speichermedium sein. Das Speichermedium kann beispielsweise Teil eines Prozessors (z. B. des Prozessor 210 der Fig. 2) sein, beispielsweise ein (nicht-flüchtiger oder flüchtiger) Programmspeicher des Prozessors oder ein Teil davon (wie Programmspeicher 212 in Fig. 2). Ausführungsbeispiele eines Speichermediums sind ein Flash-Speicher 410, eine SSD-Festplatte 411, eine magnetische Festplatte 412, eine Speicherkarte 413, ein Memory Stick 414 (z. B. ein USB-Stick), eine CD-ROM oder DVD 415 oder eine Diskette 416.

Die in dieser Spezifikation beschriebenen Ausführungsbeispiele der vorliegenden Erfindung und die diesbezüglich jeweils angeführten optionalen Merkmale und Eigenschaften sollen auch in allen Kombinationen miteinander offenbart verstanden werden. Insbesondere soll auch die Beschreibung eines von einem Ausführungsbeispiel umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Verfahrensschritte in den einzelnen Ablaufdiagrammen ist nicht zwingend, alternative Abfolgen der Verfahrensschritte sind denkbar. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar.

In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Die Verwendung des unbestimmten Artikels schließt eine Mehrzahl nicht aus. Eine einzelne Vorrichtung kann die Funktionen mehrerer in den Patentansprüchen genannten Einheiten bzw. Vorrichtungen ausführen. In den Patentansprüchen angegebene Bezugszeichen sind nicht als Beschränkungen der eingesetzten Mittel und Schritte anzusehen.

## Patentansprüche

1. Verfahren, durchgeführt von zumindest einer Vorrichtung (100, 200, 400), umfassend:
- Erfassen einer Ortsinformation indikativ für einen Aufenthaltsort einer in eine Flüssigkeit und/oder Gas führende Haushaltseinrichtung (300) einbringbaren Vorrichtung (200);
- Bestimmen einer Behandlungsrauminformation indikativ für einen Rückschluss, ob die zumindest eine Vorrichtung (200) in einem Behandlungsraum (310) der Haushaltseinrichtung (300) eingebracht ist oder nicht, wobei die Behandlungsrauminformation zumindest teilweise basierend auf der erfassten Ortsinformation bestimmt wird,
- Ausgeben bzw. Veranlassen des Ausgebens der bestimmten Behandlungsrauminformation,
**dadurch gekennzeichnet, dass** die erfasste Ortsinformation repräsentativ für eine Signalstärke von einem oder mehreren drahtlosen Kommunikationsnetzen ist, wobei die Signalstärke basierend auf von dem einen oder den mehreren Kommunikationsnetzen gesendeten Signalen erfasst wird, und, dass das Bestimmen der Behandlungsrauminformation ein Bestimmen einer Signaldämpfung zumindest teilweise basierend auf der erfassten Information, die eine Signalstärke der einen oder mehreren Kommunikationsnetze repräsentiert, umfasst.

2. Verfahren gemäß Anspruch 1, wobei das Verfahren vor Beginn eines Reinigungszyklus implementiert wird.

3. Verfahren nach Anspruch 1 oder 2, wobei die Ortsinformation von zumindest einem Sensor (214) erfasst wird, wobei der zumindest eine Sensor zur Erfassung von einem oder mehreren der folgenden Parameter i) bis vi) ausgebildet ist:
i) Lichtintensität;
ii) akustisches Signal;
iii) Leitfähigkeit;
iv) Beschleunigung;
v) Temperatur; und
vi) Signalstärke bzw. Signaldämpfung.

4. Verfahren nach einem der vorhergehenden Ansprüche, wobei die Behandlungsrauminformation ferner zumindest teilweise basierend auf einer oder mehreren der folgenden erfassten Eingaben i) und ii) bestimmt wird:
i) eine oder mehrere Nutzereingaben; und
ii) eine oder mehrere über eine Kommunikationsschnittstelle (213) von der zumindest einen Vorrichtung (200) erfassten Eingabe.

5. Verfahren nach einem der vorhergehenden Ansprüche, wobei die Ortsinformation ferner im Rahmen einer von der Haushaltseinrichtung (300) durchgeführten Behandlung von in den Behandlungsraum (310) eingebrachten Gegenständen erfasst wird.

6. Verfahren nach einem der vorhergehenden Ansprüche, das Verfahren ferner umfassend:
- Bestimmen einer Steuerungsinformation zumindest teilweise basierend auf der bestimmten Behandlungsinformation; und
- Ausgeben bzw. Veranlassen des Ausgebens der bestimmten Steuerungsinformation und/oder Durchführen bzw. Veranlassen eines Durchführens einer Aktion zumindest teilweise basierend auf der bestimmten Steuerungsinformation.

7. Verfahren nach Anspruch 6, wobei die Aktion eine Kommunikation mit der Haushaltseinrichtung (300) und optional mit einem oder mehreren weiteren Geräten (100, 400) umfasst.

8. Verfahren nach einem der vorhergehenden Ansprüche, wobei die bestimmte Behandlungsrauminformation repräsentiert, ob sich behandelte Gegenstände und/oder die zumindest Vorrichtung (200) nach einer durchgeführten Behandlung seitens der Haushaltseinrichtung (300) weiterhin innerhalb des Behandlungsraums (310) von der Haushaltseinrichtung (300) befinden oder nicht.

9. Verfahren nach einem der vorhergehenden Ansprüche, wobei die zumindest eine Vorrichtung (200) eine Dosiervorrichtung oder eine physikalische Behandlungseinrichtung ist.

10. Vorrichtung (200), welche dazu eingerichtet ist oder entsprechende Mittel umfasst, ein Verfahren nach einem der Ansprüche 1 bis 9 durchzuführen.

11. Vorrichtung nach Anspruch 10, wobei die Vorrichtung (200) eine Dosiervorrichtung oder eine physikalische Behandlungseinrichtung ist.

12. Computerprogramm, umfassend eine oder mehrere Programmanweisungen, die einen Prozessor zur Ausführung eines Verfahrens nach einem der Ansprüche 1 bis 9 veranlassen, wenn das Computerprogramm auf dem Prozessor läuft.

13. System umfassend mehrere Vorrichtungen, insbesondere eine Flüssigkeit und/oder Gas führende Haushaltseinrichtung (300) und eine weitere hiervon separate Vorrichtung (200), welche dazu eingerichtet sind, zusammen ein Verfahren nach einem der Ansprüche 1 bis 9 durchzuführen.

## Claims

1. A method, performed by at least one apparatus (100, 200, 400), the method comprising:
- detecting location information indicative of a location of an apparatus (200) that can be inserted into a liquid- and/or gas-carrying domestic appliance (300);
- determining treatment chamber information indicative of a conclusion as to whether or not the at least one apparatus (200) is inserted in a treatment chamber (310) of the domestic appliance (300), the treatment chamber information being determined at least partially on the basis of the detected location information,
- outputting or causing output of the determined treatment chamber information,
**characterized in that** the detected location information is representative of a signal strength of one or more wireless communication networks, the signal strength being detected on the basis of signals transmitted by the one or more communication networks, and **in that** the determination of the treatment chamber information comprises determining a signal attenuation at least partially on the basis of the detected information representing a signal strength of the one or more communication networks.

2. The method according to claim 1, wherein the method is implemented prior to starting a cleaning cycle.

3. Method according to claim 1 or 2, wherein the location information is detected by at least one sensor (214), wherein the at least one sensor is designed to detect one or more of the following parameters i) to vi):
i) light intensity;
ii) acoustic signal;
iii) conductivity;
iv) acceleration;
v) temperature; and
vi) signal strength or signal attenuation.

4. The method according to one of the preceding claims, wherein the treatment chamber information is further determined at least partially on the basis of one or more of the following detected inputs i) and ii):
i) one or more user inputs; and
ii) one or more input detected by the at least one apparatus (200) via a communication interface (213).

5. The method according to one of the preceding claims, wherein the location information is further detected as part of a treatment of objects inserted into the treatment chamber (310), which treatment is performed by the domestic appliance (300).

6. The method according to one of the preceding claims, the method further comprising:
- determining control information at least partially on the basis of the determined treatment information; and
- outputting or causing output of the determined control information and/or performing or causing performance of an action at least partially on the basis of the determined control information.

7. The method according to claim 6, wherein the action comprises communication with the domestic appliance (300) and optionally with one or more further devices (100, 400).

8. The method according to one of the preceding claims, wherein the determined treatment chamber information represents whether or not treated objects and/or the at least apparatus (200) continue to be located within the treatment chamber (310) of the domestic appliance (300) after treatment has been performed by the domestic appliance (300).

9. The method according to one of the preceding claims, wherein the at least one apparatus (200) is a metering apparatus or a physical treatment device.

10. An apparatus (200) that is designed or comprises corresponding means for performing a method according to one of claims 1 to 9.

11. The apparatus according to claim 10, wherein the apparatus (200) is a metering apparatus or a physical treatment device.

12. A computer program comprising one or more program instructions that cause a processor to execute a method according to one of claims 1 to 9 when the computer program is running on the processor.

13. A system comprising a plurality of apparatuses, in particular a liquid- and/or gas-carrying domestic appliance (300) and a further apparatus (200) separate therefrom, which apparatuses are designed to perform, together, a method according to one of claims 1 to 9.

## Revendications

1. Procédé, mis en oeuvre par au moins un dispositif (100, 200, 400), comprenant :
- la détection d'une information d'emplacement indiquant un emplacement d'arrêt d'un dispositif (200) pouvant être introduit dans un appareil électroménager (300) guidant du liquide et/ou du gaz ;
- la détermination d'une information d'espace de traitement indiquant une conclusion concernant le fait de savoir si l'au moins un dispositif (200) est introduit dans un espace de traitement (310) de l'appareil électroménager (300) ou non, l'information d'espace de traitement étant déterminée au moins partiellement sur la base de l'information d'emplacement détectée,
- l'émission ou l'incitation à l'émission de l'information d'espace de traitement déterminée,
**caractérisé en ce que** l'information d'emplacement détectée représente une puissance de signal d'un ou de plusieurs réseaux de communication sans fil, la puissance de signal étant détectée sur la base de signaux envoyés par le ou les réseaux de communication, **et en ce que** la détermination de l'information d'espace de traitement comprend une détermination d'une atténuation de signal, au moins partiellement sur la base de l'information détectée, qui représente une puissance de signal du ou des réseaux de communication.

2. Procédé selon la revendication 1, le procédé étant implémenté avant le début d'un cycle de nettoyage.

3. Procédé selon la revendication 1 ou 2, l'information d'emplacement étant détectée par au moins un capteur (214), l'au moins un capteur étant configuré pour la détection d'un ou de plusieurs des paramètres i) à vi) suivants :
i) intensité lumineuse ;
ii) signal acoustique ;
iii) conductibilité ;
iv) accélération ;
v) température ; et
vi) puissance de signal ou atténuation de signal.

4. Procédé selon l'une quelconque des revendications précédentes, l'information d'espace de traitement étant en outre déterminée au moins partiellement sur la base d'une ou de plusieurs des entrées i) et ii) détectées suivantes :
i) une ou plusieurs entrées utilisateur ; et
ii) une ou plusieurs entrées détectées par l'intermédiaire d'une interface de communication (213) de l'au moins un dispositif (200).

5. Procédé selon l'une quelconque des revendications précédentes, l'information d'emplacement étant en outre détectée dans le cadre d'un traitement, mis en oeuvre par l'appareil électroménager (300), d'objets introduits dans l'espace de traitement (310).

6. Procédé selon l'une quelconque des revendications précédentes, le procédé comprenant en outre :
- la détermination d'une information de commande au moins partiellement sur la base de l'information de traitement déterminée ; et
- l'émission ou l'incitation à l'émission de l'information de commande déterminée et/ou la mise en oeuvre ou l'incitation à la mise en oeuvre d'une action au moins partiellement sur la base de l'information de commande déterminée.

7. Procédé selon la revendication 6, l'action comprenant une communication avec l'appareil électroménager (300) et éventuellement avec une ou plusieurs autres machines (100, 400).

8. Procédé selon l'une quelconque des revendications précédentes, l'information d'espace de traitement déterminée représentant le fait de savoir si des objets traités et/ou l'au moins dispositif (200), après un traitement mis en oeuvre par l'appareil électroménager (300), se trouvent en outre à l'intérieur de l'espace de traitement (310) de l'appareil électroménager (300) ou non.

9. Procédé selon l'une quelconque des revendications précédentes, l'au moins un dispositif (200) étant un dispositif de dosage ou un appareil de traitement physique.

10. Dispositif (200), lequel est configuré ou comprend des moyens correspondants pour mettre en oeuvre un procédé selon l'une des revendications 1 à 9.

11. Dispositif selon la revendication 10, le dispositif (200) étant un dispositif de dosage ou un appareil de traitement physique.

12. Programme informatique comprenant une ou plusieurs instructions de programme qui incitent un processeur à réaliser un procédé selon l'une des revendications 1 à 9 lorsque le programme informatique est exécuté sur le processeur.

13. Système comprenant plusieurs dispositifs, en particulier un appareil électroménager (300) guidant du liquide et/ou du gaz et un autre dispositif (200) séparé en outre de celui-ci, lesquels sont configurés pour mettre en oeuvre conjointement un procédé selon l'une des revendications 1 à 9.
